# EUROPEAN PATENT APPLICATION

(11) **EP 2 629 547 A1**
(43) Date of publication of application: **21.08.2013**
(21) Application number: 13153185.7
(22) Date of filing: 30.01.2013
(51) Int. Cl.: H04N 21/845, H04N 21/84, H04N 21/6587

(54) **Reproduction apparatus, recording/delivery apparatus, reproduction method, and recording/delivery method**

(30) Priority: 06.02.2012 JP 2012023220
(71) Applicant: Sony Corporation, Tokyo 108-0075 (JP)
(72) Inventor: Kita, Youji, Minato-ku, Tokyo 108-0075 (JP); Mizuno, Masayoshi, Minato-ku, Tokyo 108-0075 (JP)
(74) Representative: Meldrum, David James

(57) **Abstract**

A recording/delivery apparatus includes a receiver, a recorder, an information map creating unit, an information map supplying unit, and a stream data reply unit. The receiver receives a broadcast data stream. The recorder records the received data stream in a recording medium. The information map creating unit creates an information map based on the data stream. The information map identifies a changed packet in a target stream of the data stream. The information map creating unit records the information map in the recording medium. The information map supplying unit supplies the information map to a reproduction apparatus coupled to the recording/delivery apparatus. The stream data reply unit provides, in response to a request for the data stream from the reproduction apparatus, a start position of the data stream.

## Description

### Cross Reference to Related Application

The present disclosure contains subject matter related to that disclosed in Japanese Priority Patent Application JP 2012-023220 filed in the Japan Patent Office on February 6, 2012.

### Background

The present disclosure relates to a reproduction apparatus and a recording/delivery apparatus, specifically but not exclusively to such apparatus which can be used in a home network in conformity to DLNA (Digital Living Network Alliance) standard. The present disclosure further relates to a reproduction method and a recording/delivery method.

Recently, many digital devices, which are configured to record telecasted content in recording media such as hard disks and to allow users to watch the content later, are on the market. Such digital devices include television receivers, personal computers, and the like. Above all, recorder/players employing Blu-ray Discs, apparatuses capable of sharing content with other apparatuses in home networks in conformity with DLNA (Digital Living Network Alliance) standard, and the like are becoming widely used.

According to DLNA standard, a server apparatus receives broadcasted MPEG2-TS stream data of content, and records the MPEG2-TS stream data in a recording medium. A client apparatus specifies content. The server apparatus streams (delivers) stream data of the specified content to the client apparatus via a network. The client apparatus analyzes the received stream data, and reproduces the content.

In a case of reproducing video stream of content from a specified reproduction-start point, stream data, which starts from the specified reproduction-start point, should be a head packet (I picture) of GOP (Group Of Pictures). However, it is necessary to analyze PID of stream data in order to determine which of I picture, B picture, and P picture is the actually-received data. Because of this, when analyzing PID, GOP to be reproduced may be flowed. As a result, it is necessary to request to resend stream data. Alternatively, it is necessary to request for stream data from a position before a reproduction-start point, in consideration of PID analysis time. Alternatively, other countermeasures are demanded. As a result, it takes time to reproduce content from a specified reproduction-start point in reply, which is problematic. It takes time in a case of not only reproducing content in reply in a normal way but also reproducing content in reply in a way other than the normal way, which is problematic. In the way other than the normal way, a reproduction-start position and a reproduction-range are specified. Examples of reproducing content in a way other than the normal way include fast-forward reproduction, fast-wind reproduction, skip reproduction, and the like.

Japanese Patent Application Laid-open No. 2001-173091 discloses the following scheme. A server apparatus adds information such as picture information, which is created when encoding data, to packets. A client apparatus cancels data-decoding processing until I-picture data is found based on the picture information, which is added to packets of data obtained from the server apparatus, and based on other information.

However, the only effect of this scheme is that decoding processing is omitted after identifying a packet type. It still needs to analyze a stream until a packet type is identified. Because of this, this scheme still has a problem of responsivity.

### Summary

Particular aspects and embodiments are set out in the appended claims.

Viewed from a first contextual perspective, a reproduction apparatus can be connected to a recording/delivery apparatus via a network. The recording/delivery apparatus records stream data of content, and delivers the stream data of the content to the reproduction apparatus. The reproduction apparatus receives the stream data of the content, and reproduces the content. In such a system, it takes time for the reproduction apparatus to reproduce the content from a specified reproduction-start point in reply. In addition, it takes time in a case of not only reproducing content in reply in a normal way but also reproducing content in reply in a way other than the normal way, which is problematic. In the way other than the normal way, a reproduction-start position and a reproduction-range are specified. Examples of reproducing content in a way other than the normal way include fast-forward reproduction, fast-wind reproduction, skip reproduction, and the like.

Further, the reproduction apparatus specifies a reproduction-start point of content only by means of time. Because of this, there is no assurance that data is supplied to a decoder from head data of GOP. This is another reason of time-consuming reproduction of content from a specified reproduction-start point in reply.

In view of the above-mentioned circumstances, it is desired to provide a reproduction apparatus, a recording/delivery apparatus, a reproduction method, and a recording/delivery method, which are more responsive in reproducing content.

According to the present technology, there is provided a recording/delivery apparatus, including: a receiver configured to receive a broadcast data stream; a recorder configured to record the received data stream in a recording medium; an information map creating unit configured to create a first information map based on the data stream, wherein the first information map identifies a changed packet in a target stream of the data stream, the information map creating unit recording the first information map in the recording medium, wherein the first information map is associated with the data stream; an information map supplying unit configured to supply the first information map to a reproduction apparatus coupled to the recording/delivery apparatus; and a stream data reply unit configured to provide, in response to a request for the data stream from the reproduction apparatus, a start position of the data stream.

According to the present technology, there is provided a reproduction apparatus, comprising: first storage configured to store a first information map, wherein the first information map identifies a position at which a packet of a data stream is changed, the data stream being recorded in a recording/delivery apparatus coupled to the reproduction apparatus; and a reproduction controller configured to: receive the data stream from the recording/delivery apparatus, determine a target stream from the received data stream using the first information map, wherein the target stream starts at the position at which the packet of the data stream is changed, and reproduce the target stream.

According to the present technology, there is provided a recording/delivery method, including: receiving a data stream; recording the received data stream in a recording medium; creating an information map, wherein the information map identifies a position at which a packet of the data stream is changed; recording the information map in the recording medium, wherein the information map is associated with the data stream; supplying the information map to a reproduction apparatus; and receiving a request from the reproduction apparatus, wherein a start position in the data stream is specified in the request.

According to the present technology, there is provided a reproduction method, including: receiving a data stream; accessing an information map to determine a target stream of the received data stream, wherein the information map identifies a position at which a packet of the data stream is changed; and reproducing the target stream, wherein the target stream starts at the position at which the packet of the data stream is changed.

As described above, the present technology is more responsive in reproducing content.

These and other objects, features and advantages of the present disclosure will become more apparent in light of the following detailed description of best mode embodiments thereof, as illustrated in the accompanying drawings.

### Brief Description of Drawings

Embodiments of the present teachings will now be described with reference to the accompanying drawings, throughout which like parts are referred to by like references, and in which:
Fig. 1 is a diagram showing the configuration of a DLNA system according to an embodiment of the present technology;
Fig. 2 is a block diagram showing the configuration of a recording/delivery apparatus of Fig. 1;
Fig. 3 is a block diagram showing the configuration of a reproduction apparatus of Fig. 1;
Fig. 4 is a diagram showing the configurations of a PMT packet and a transport stream including the PMT packets;
Fig. 5 is a diagram showing the format of PMT;
Fig. 6 is a diagram showing the format of PMT_MAP;
Fig. 7 is a diagram for explaining SE_MAP;
Fig. 8 is a diagram showing the configuration of a table (SE_map_for_one_stream_PID);
Fig. 9 is a diagram showing the configuration of SE_fine table;
Fig. 10 is a diagram showing the configuration of SE_coarse table;
Fig. 11 is a diagram showing the format of SE_MAP;
Fig. 12 is a diagram showing the format of table body (SE_map_for_one_stream_PID) of SE_MAP;
Fig. 13 is a flowchart showing how the recording/delivery apparatus of Fig. 1 works when recording an AV stream; and
Fig. 14 is a flowchart showing how the reproduction apparatus of Fig. 1 firstly selects content and finally reproduces the content.

### Detailed Description of Embodiments

Hereinafter, an embodiment of the present disclosure will be described with reference to the drawings.

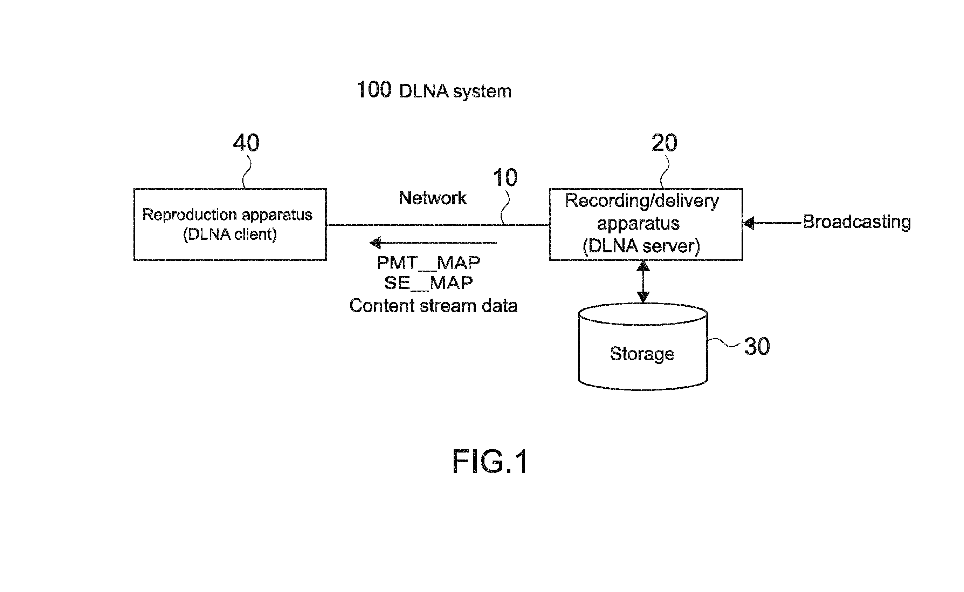

Fig. 1 is a diagram showing the configuration of a DLNA system according to a first embodiment of the present technology.

As shown in Fig. 1, a DLNA system 100 of this embodiment includes a recording/delivery apparatus 20 as a DLNA server, and a reproduction apparatus 40 as a DLNA client. The recording/delivery apparatus 20 is connected with the reproduction apparatus 40 via a network 10 such as a LAN (Local Area Network). The recording/delivery apparatus 20 is configured to receive content stream data (e.g., digital-terrestrial-broadcasted content stream data) and to record the content stream data in storage 30. The recording/delivery apparatus 20 is configured to stream (deliver) the content stream data to the reproduction apparatus 40 via the network 10 such as a LAN (Local Area Network). Specifically, the recording/delivery apparatus 20 is a recorder apparatus, a television apparatus including a recorder, a personal computer, or the like. The reproduction apparatus 40 is configured to obtain stream data of content from the recording/delivery apparatus 20 via the network 10. The content is selected from a content list recorded in the recording/delivery apparatus 20 by a user. The reproduction apparatus 40 is configured to reproduce the stream data. Specifically, the reproduction apparatus 40 is a game machine, a smartphone, a television apparatus, a personal computer, or the like.

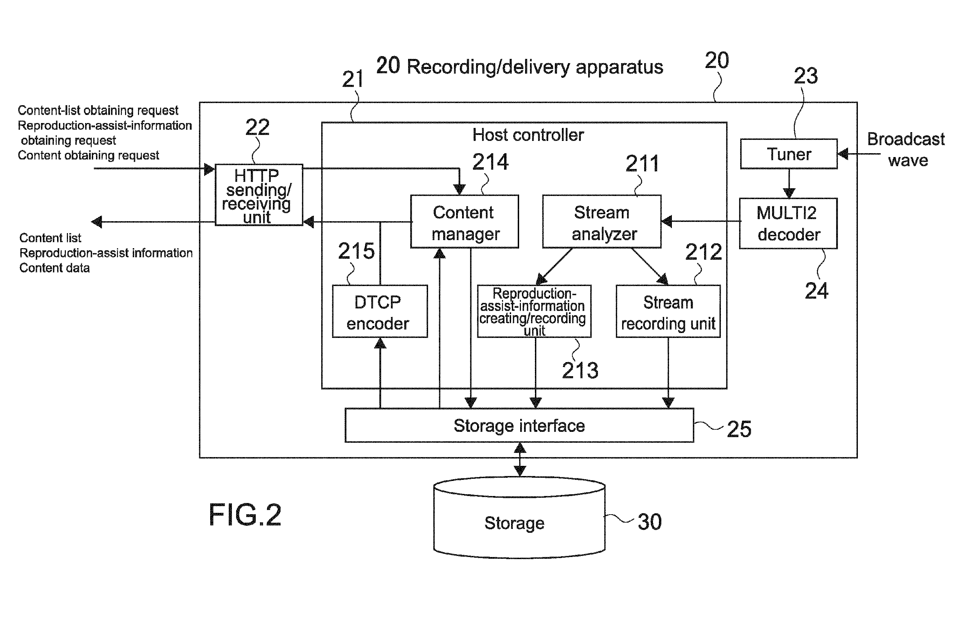

Fig. 2 is a block diagram showing the configuration of the recording/delivery apparatus 20.

The recording/delivery apparatus 20 includes a host controller 21, an HTTP sending/receiving unit 22, a tuner 23, a MULTI2 decoder 24, a storage interface 25, and the storage 30.

The host controller 21 includes a CPU (Central Processing Unit), a ROM (Read Only Memory), a RAM (Random Access Memory), and the like. In the host controller 21, the ROM is fixed storage, which stores data and programs executed by the CPU. The RAM is a main memory for the CPU.

The HTTP sending/receiving unit 22 communicates with the reproduction apparatus 40 via the network 10 over the HTTP (HyperText Transfer Protocol).

The tuner 23 selects a broadcast signal with a predetermined carrier frequency from received broadcast signals. Examples of the broadcast signals include digital terrestrial broadcast signals, BS digital broadcast signals, and CS digital broadcast signals. The tuner 23 receives (receiver unit) the selected broadcast signal. The tuner 23 demodulates the received broadcast signal. Examples of a demodulation scheme include, for example, BPSK (Binary Phase Shift Keying), QPSK (Quadrature Phase Shift Keying), TC-8PSK (Trellis-Coded 8-phase PSK), and the like.

A descrambler (not shown) descrambles the demodulated signal to thereby obtain a MULTI2-encoded transport stream (TS). The MULTI2 decoder 24 decodes the MULTI2-encoded transport stream (TS).

The storage 30 is, for example, an HDD (Hard Disk Drive), a Blu-ray Disc, a flash memory, or another readable/writable recording medium.

The storage interface 25 is an interface for the host controller 21 and for the storage 30.

Programs stored in the ROM causes the host controller 21 to function as a stream analyzer 211, a stream recording unit 212, a reproduction-assist-information creating/recording unit 213, a content manager 214, and a DTCP encoder 215.

The stream analyzer 211 analyzes the transport stream, which is obtained by decoding the MULTI2-encoded transport stream. The stream analyzer 211 supplies TS packets, which are necessary for recording in the storage 30, to the stream recording unit 212. The stream analyzer 211 supplies data, which is necessary to create reproduction-assist information (described later), to the reproduction-assist-information creating/recording unit 213.

The stream recording unit 212 records the TS packets, which are supplied from the stream analyzer 211, in the storage 30 as content stream data.

The reproduction-assist-information creating/recording unit 213 creates, based on the data supplied from the stream analyzer 211, PMT_MAP (Program Map Table Map) and SE_MAP (Stream Entry Map) as reproduction-assist information (information-map creating unit). The reproduction-assist-information creating/recording unit 213 records the reproduction-assist information in the storage 30, in which the reproduction-assist information is connected with the content stream data.

The content manager 214 is configured to execute the following processing.
1. The content manager 214 manages the content stream data and the reproduction-assist information, which are recorded in the storage 30. In response to a content-list request from the reproduction apparatus 40, the content manager 214 creates a content list. The content-list request is sent over the HTTP, for example. The content list is a list of information on content recorded in the storage 30. The content manager 214 sends the content list to the reproduction apparatus 40 in reply.
2. A user of the reproduction apparatus 40 selects content from a content list. In response to a reproduction-assist-information obtaining request for reproducing the selected content, the content manager 214 retrieves reproduction-assist information of the selected content from the storage 30. The content manager 214 sends the retrieved reproduction-assist information to the reproduction apparatus 40 in reply (information-map supplying unit).
3. In response to a content obtaining request from the reproduction apparatus 40, the content manager 214 streams (delivers) stream data of appropriate content, which is recorded in the storage 30, to the reproduction apparatus 40 by means of the HTTP sending/receiving unit 22. In this case, if the requested content is required to be encoded, the content manager 214 instructs the DTCP encoder 215 to encode the stream data of the content. Then, the content manager 214 streams (delivers) the stream data, which is encoded by the DTCP encoder 215, to the reproduction apparatus 40 by means of the HTTP sending/receiving unit 22.

Further, the content manager 214 is configured to execute processing in response to a content obtaining request. In the content obtaining request, a reproduction-start position of content in stream data is specified by a byte order. That is, the content manager 214 is configured to retrieve, based on information indicating a reproduction-start position (byte order) included in the content obtaining request, data from the specified byte position in the stream data of appropriate content. The content manager 214 is configured to send the retrieved stream data to the reproduction apparatus 40 in reply (stream-data reply unit).

In response to a command from the content manager 214, the DTCP encoder 215 encodes the content stream data in conformity to DTCP-IP (Digital Transmission Content Protection over Internet Protocol) standard.

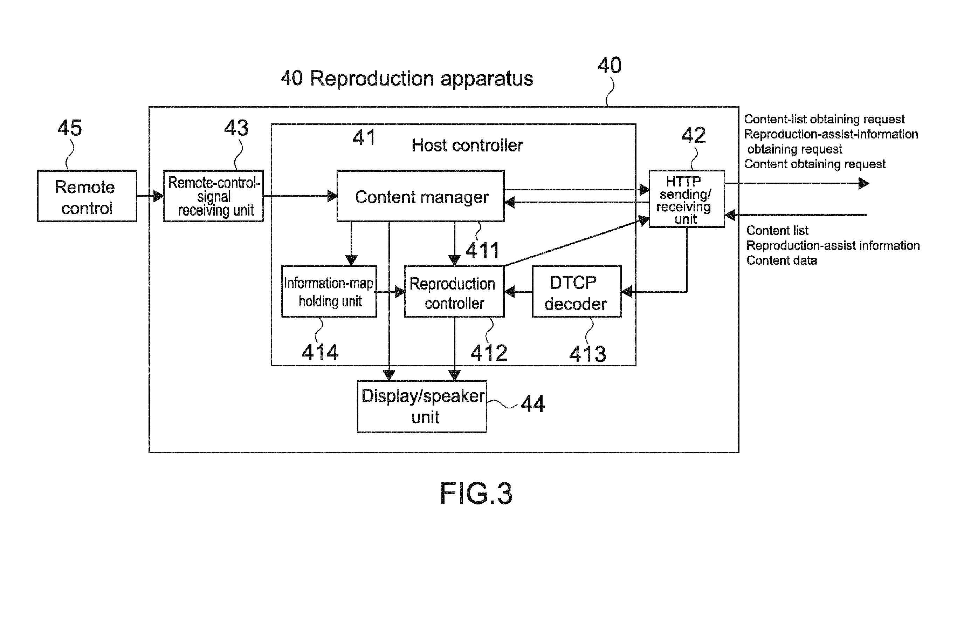

Fig. 3 is a block diagram showing the configuration of the reproduction apparatus 40.

The reproduction apparatus 40 includes a host controller 41, an HTTP sending/receiving unit 42, a remote-control-signal receiving unit 43, and a display/speaker unit 44.

The host controller 41 includes a CPU (Central Processing Unit), a ROM (Read Only Memory), a RAM (Random Access Memory), and the like. In the host controller 41, the ROM is fixed storage, which stores data and programs executed by the CPU. The RAM is a main memory for the CPU.

The HTTP sending/receiving unit 42 communicates with the recording/delivery apparatus 20 via the network 10 over the HTTP.

The remote-control-signal receiving unit 43 receives control signals from a remote control 45, a key input unit (not shown), and the like, which are configured to be operated by a user. The remote-control-signal receiving unit 43 supplies the control signals to the host controller 41.

The display/speaker unit 44 provides information on reproduced content stream data to a user. The content stream data is obtained from the recording/delivery apparatus 20.

Programs loaded into the RAM causes the host controller 41 to function as a content manager 411, a reproduction controller 412, a DTCP decoder 413, and an information-map holding unit 414.

The content manager 411 is configured to execute the following processing.
1. The content manager 411 receives a content-list obtaining instruction, which is input from the remote control 45 operated by a user, via the remote-control-signal receiving unit 43. At this time, the content manager 411 controls the HTTP sending/receiving unit 42 such that the HTTP sending/receiving unit 42 sends a content-list obtaining request to the recording/delivery apparatus 20 over the HTTP. The content manager 411 receives a content list, which is sent from the recording/delivery apparatus 20 in reply, by means of the HTTP sending/receiving unit 42. The content manager 411 displays the content list on the display/speaker unit 44.
2. The content manager 411 receives a reproduction instruction, which includes information specifying content, via the remote-control-signal receiving unit 43. The content is selected from a content list by a user by using the remote control 45. At this time, the content manager 411 controls the HTTP sending/receiving unit 42 such that the HTTP sending/receiving unit 42 sends a request to obtain reproduction-assist information of the content to the recording/delivery apparatus 20. The content manager 411 receives reproduction-assist information, which is sent from the recording/delivery apparatus 20 in reply, by means of the HTTP sending/receiving unit 42. The content manager 411 stores the received reproduction-assist information in the information-map holding unit 414 (first information-map storage, second information-map storage).
3. In a case where a reproduction-start request time of selected content is specified by the remote control 45 controlled by a user, the content manager 411 supplies a reproduction instruction, which includes the reproduction-start request time, to the reproduction controller 412.

The reproduction controller 412 receives the reproduction instruction, which includes the reproduction-start request time, from the content manager 411. Then, the reproduction controller 412 calculates a reproduction-start position (byte order) in stream data of the selected content, based on the reproduction-start request time and based on reproduction-assist information held by the information-map holding unit 414. In addition, the reproduction controller 412 determines a PID (Packet Identifier) identifying a type of packets of an elementary stream, which is to be reproduced from the reproduction-start position. The reproduction controller 412 controls the HTTP sending/receiving unit 42 such that the HTTP sending/receiving unit 42 sends a content obtaining request, which includes information on the calculated reproduction-start position (byte order), to the recording/delivery apparatus 20. The reproduction controller 412 receives stream data, which is streamed (delivered) from the recording/delivery apparatus 20 in response to the content obtaining request, by means of the HTTP sending/receiving unit 42. The reproduction controller 412 extracts packets with the determined PID from the received stream data, and reproduces the received stream data.

In a case where the stream data delivered from the recording/delivery apparatus 20 is encoded in conformity with DTCP-IP standard, the DTCP decoder 413 decodes the encoded stream data. The DTCP decoder 413 supplies the decoded stream data to the reproduction controller 412.

The information-map holding unit 414 holds PMT_MAP (Program Map Table Map) (reproduction-assist information) and SE_MAP (Stream Entry Map) (reproduction-assist information) obtained from the recording/delivery apparatus 20.

The recording/delivery apparatus 20 is configured to create reproduction-assist information for assisting reproduction of content when recording content in the storage 30, for example. The recording/delivery apparatus 20 is configured to store the reproduction-assist information in the storage 30, in which the reproduction-assist information is connected with content stream.

The reproduction-assist information includes PMT_MAP (Program Map Table Map) and SE_MAP (Stream Entry Map).

PMT_MAP (first map information) includes information on a position in stream data of recorded content, at which a packet identifier of an elementary stream is changed. PMT_MAP (first map information) also includes the changed packet identifier of the elementary stream. Here, the "information on a position at which a packet identifier of an elementary stream is changed" is information on a start position of a packet including the changed PMT (Program Map Table) in stream data.

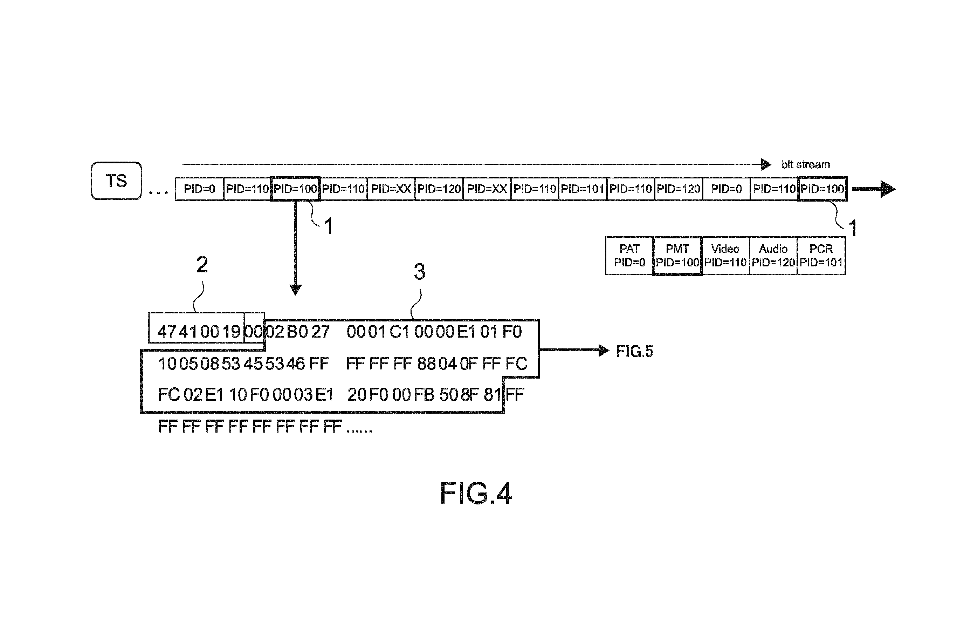

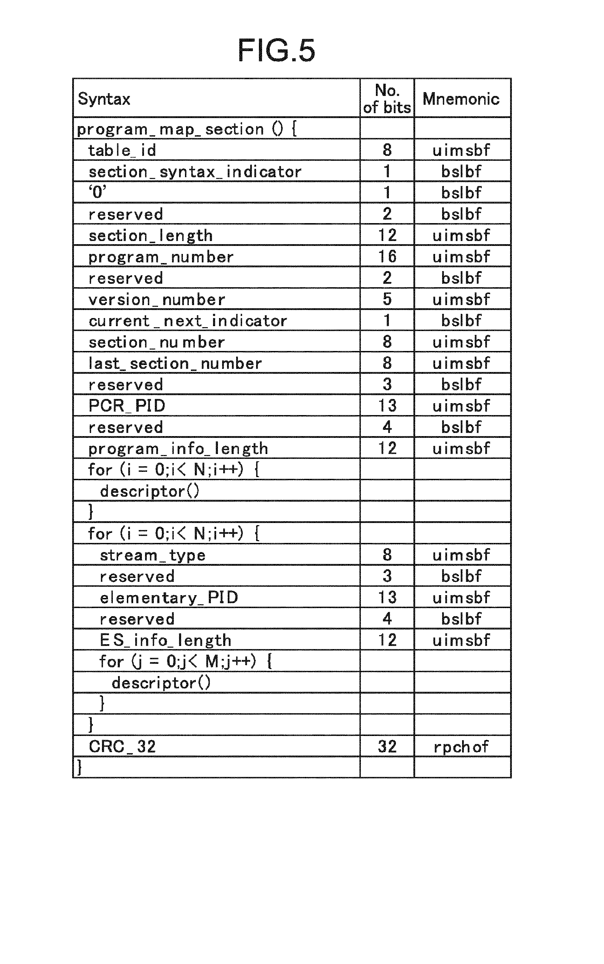

Each of Fig. 4 and Fig. 5 shows an example of PMT.

As shown in Fig. 4, a packet 1 with PID="100" is a PMT. The PMT packet 1 is inserted in a stream more than once every 100 msec. PMT is a table for specifying a packet identifier (PID: Packet Identifier) of TS packets, which transmit an elementary stream of content. The PMT packet 1 includes a header 2 and a payload 3.

Fig. 5 is a diagram showing the format of the payload 3 in PMT.

PMT includes, as section data, table identifier (table_id), section syntax indicator (section_syntax_indicator), section length (section_length), program number (program_number), version number (version_number), current next indicator (current_next_indicator), section number (section_number), last section number (last_section_number), program clock reference PID (PCR_PID), program information length (program_info_length), stream type identifier (stream_type), elementary PID (elementary_PID), ES information length (ES_info_length), and the like.

Here, the elementary PID (elementary_PID) is a packet identifier (PID) of TS packets, which transmit a video or audio elementary stream. A "changed PMT" is a PMT whose elementary PID (elementary_PID) is changed.

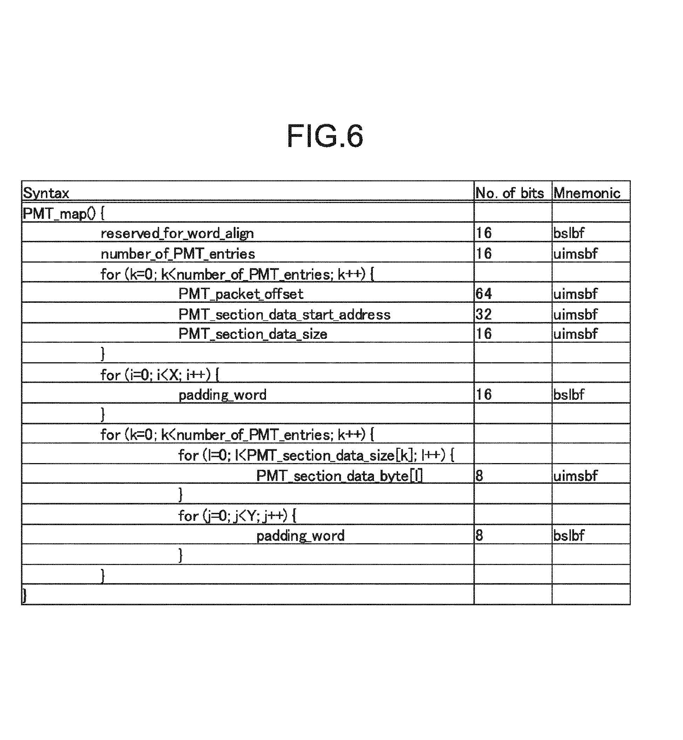

Fig. 6 is a diagram showing the format of PMT_MAP.

The number of PMT entries (number_of_PMT_entries) is the number of PMT entries included in PMT_MAP.

PMT packet offset (PMT_packet_offset) is a value expressed by an offset of the number of packets from the head of stream data to the PMT. That is, PMT packet offset (PMT_packet_offset) is start-position information of a packet including the above-mentioned changed PMT in stream data. The packet size of MPEG-2 transport stream is fixed to 188 bytes. Because of this, the start-position information, which is expressed by an offset of the number of packets from the head of stream data to the PMT, is information indicating the start position of PMT by means of a byte order.

PMT section start address (PMT_section_data_start_address) is the address of the head byte of PMT section data.

PMT section data size (PMT_section_data_size) is the size of the PMT section data.

PMT section data byte (PMT_section_data_byte) is the PMT section data body.

Padding data (padding_word) is dummy data as a filler to attain PMT_MAP of 32-bit alignment.

PMT packet offset (PMT_packet_offset), PMT section start address (PMT_section_data_start_address), PMT section data size (PMT_section_data_size), PMT section data byte (PMT_section_data_byte), and padding data (padding_word) are added every time PMT is changed.

SE_MAP (second information map) is an information map of PTS (Presentation Time Stamp) of GOP (Group Of Pictures) head packet, and start-position information of the packet of stream data.

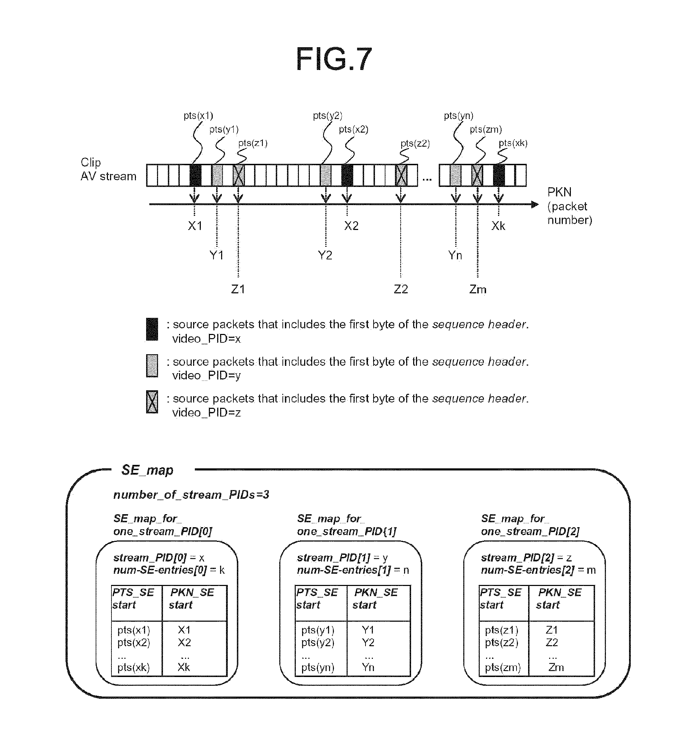

Fig. 7 is a diagram for explaining SE_MAP.

SE_MAP includes one or more tables (SE_map_for_one_stream_PID). Each table is created based on elementary streams, which are transmitted by packets having the same PID value. In each table, PTS (PTS_SE_start) of a GOP head packet and start-position information (PKN_SE_start) of the GOP head packet of stream data are registered in correspondence with each other. Here, the start-position information (PKN_SE_start) of the GOP head packet is expressed by an offset of the number of packets from the head of the stream data of a packet. The packet includes the head byte of a sequence header of a GOP, which is referred to according to the corresponding PTS value. Because of this, the start-position information (PKN_SE_start) of the GOP head packet is information, in which the start position of the packet is expressed by a byte order.

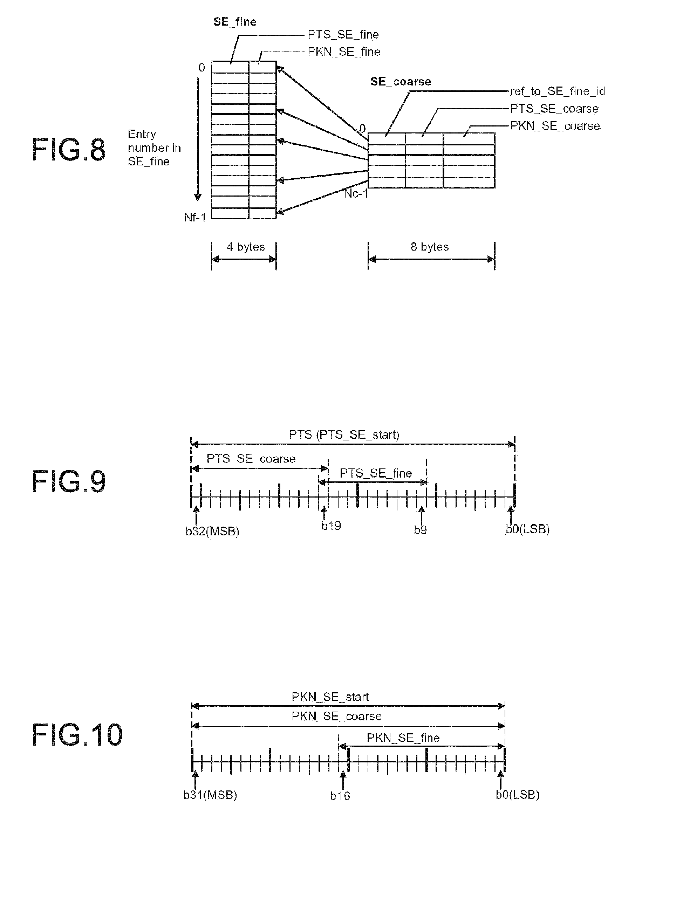

As shown in Fig. 8, a table (SE_map_for_one_stream_PID) is divided into two semitables, i.e., SE_fine table and SE_coarse table, in order to downsize the tables and to increase a table search speed.

As shown in Fig. 9, SE_fine table is a table in which PTS_SE_fine and PKN_SE_fine are registered in correspondence with each other. PTS_SE_fine includes values from 9th bit to 19th bit, from the LSB (leastsignificant bit) side of PTS expressed by 32 bits. PKN_SE_fine includes values from 0th bit to 16th bit, from the LSB side of start-position information (PKN_SE_start) of the GOP head packet expressed by 32 bits. An ID is given to each correspondence relation between PTS_SE_fine and PKN_SE_fine.

As shown in Fig. 10, SE_coarse table is a table in which PTS_SE_coarse, PKN_SE_coarse, and IDs are registered in correspondence with each other. PTS_SE_coarse includes values from 19th bit to 32th bit, from the LSB side of PTS. PKN_SE_coarse includes values from 0th bit to 32nd bit, from the LSB side of start-position information (PKN_SE_start) of the GOP head packet. The ID is a referenced ID of SE_fine table.

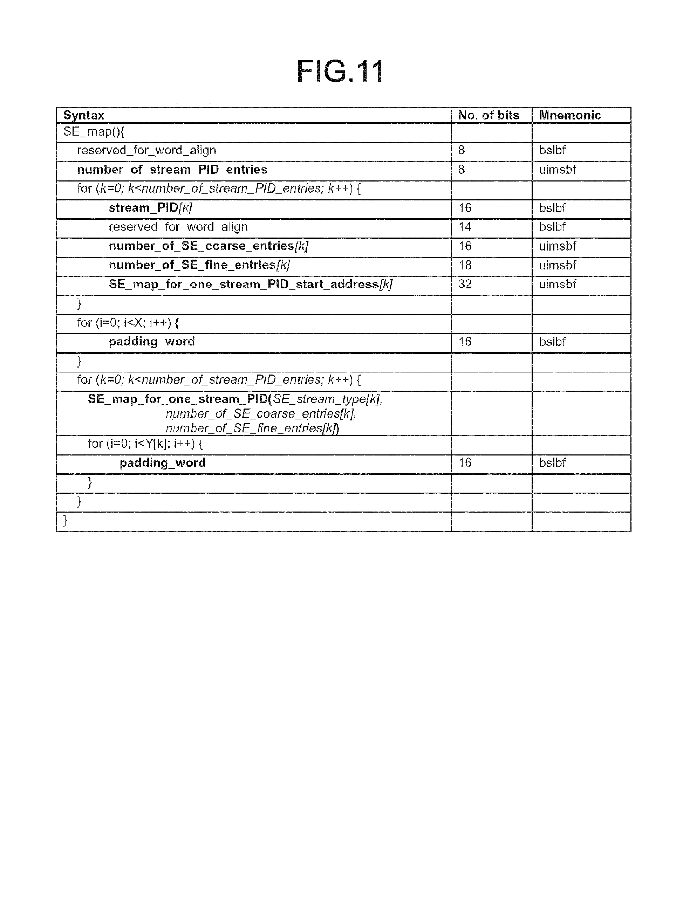

Fig. 11 shows the format of SE_MAP.

SE_MAP includes the number of stream PID entries (number_of_stream_PID_entries), stream PID value (stream_PID), the number of SE_coarse tables (number_of_SE_coarse_entries), the number of SE_fine tables (number_of_SE_fine_entries), table start address (SE_map_for_one_stream_PID_start_address), table body (SE_map_for_one_stream_PID), padding data (padding_word), and the like.

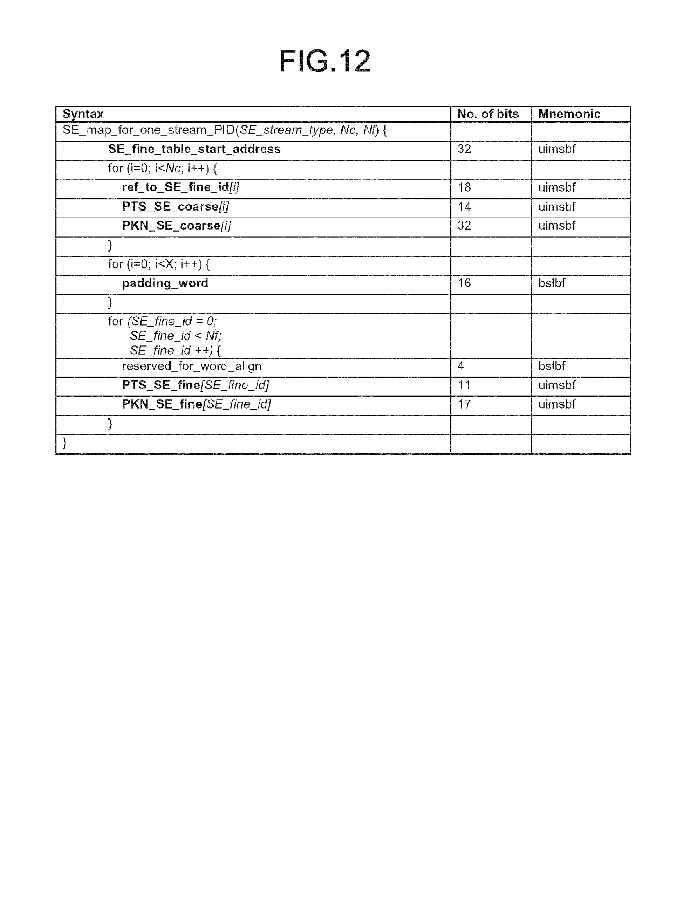

Fig. 12 is a diagram showing the format of SE_MAP table body (SE_map_for_one_stream_PID).

In the table body, in addition to SE_fine table start address (SE_fine_table_start_address), SE_fine table reference ID (ref_to_SE_fine_id), PTS_SE_coarse, PTS_SE_fine, PKN_SE_coarse, and PKN_SE_fine are registered. They are the above-mentioned PTS of GOP head packet, and start-position information of the packet of stream data.

Next, how the recording/delivery apparatus 20 and the reproduction apparatus 40 work in the DLNA system 100 of this embodiment will be described.

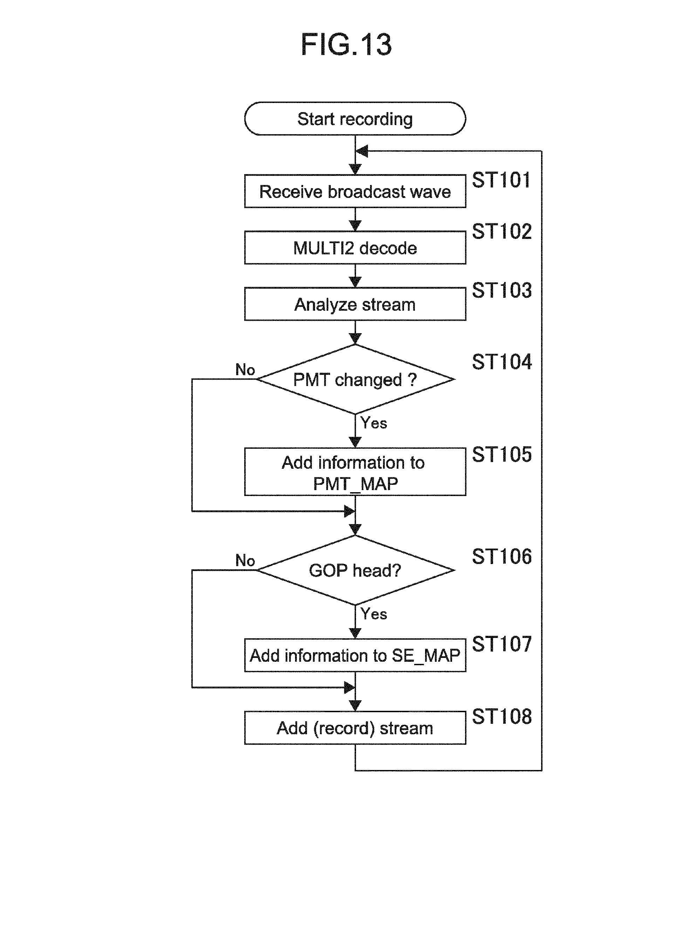

Fig. 13 is a flowchart showing how the recording/delivery apparatus 20 records content stream data and reproduction-assist information.

First, the tuner 23 of the recording/delivery apparatus 20 receives a broadcast signal of a specified channel at a specified time. The tuner 23 demodulates the broadcast signal (Step S101). The MULTI2 decoder 24 descrambles the demodulated broadcast signal to thereby reconstruct a transport stream (Step S102).

The transport stream is supplied to the host controller 21. The stream analyzer 211 of the host controller 21 analyzes the transport stream (Step S103).

The stream analyzer 211 analyzes each TS packet of the obtained transport stream as follows.
A. If each TS packet is a packet with a changed PMT (Step S104).
B. If each TS packet is a GOP head packet (Step S106).

In a case where a packet with a changed PMT is detected (Step S104, YES), the stream analyzer 211 supplies section data of the packet with a changed PMT and start-position information of the PMT packet of stream data to the reproduction-assist-information creating/recording unit 213. The reproduction-assist-information creating/recording unit 213 adds the above-mentioned information, which is supplied from the stream analyzer 211, to PMT_MAP (Step S105).

Note that information on the first PMT packet of content stream data is recorded in PMT_MAP, unconditionally.

In a case where a packet with an unchanged PMT is detected, Step S105 is skipped.

In a case where a GOP head packet is detected (Step S106, YES), the stream analyzer 211 supplies PTS included in the GOP head packet and start-position information of the packet of stream data to the reproduction-assist-information creating/recording unit 213. The reproduction-assist-information creating/recording unit 213 adds the information, which is supplied from the stream analyzer 211, to SE_MAP (Step S107).

In a case where a packet other than the GOP head packet is detected, Step S107 is skipped.

In this manner, content stream data, PMT_MAP (reproduction-assist information), and SE_MAP (reproduction-assist information) are recorded in the storage 30, in which they are connected with each other (Step S108).

### (2. How reproduction apparatus 40 firstly selects content and finally reproduces the content)

Next, how the reproduction apparatus 40 obtains and reproduces stream data of content, which is recorded in the recording/delivery apparatus 20, will be described.

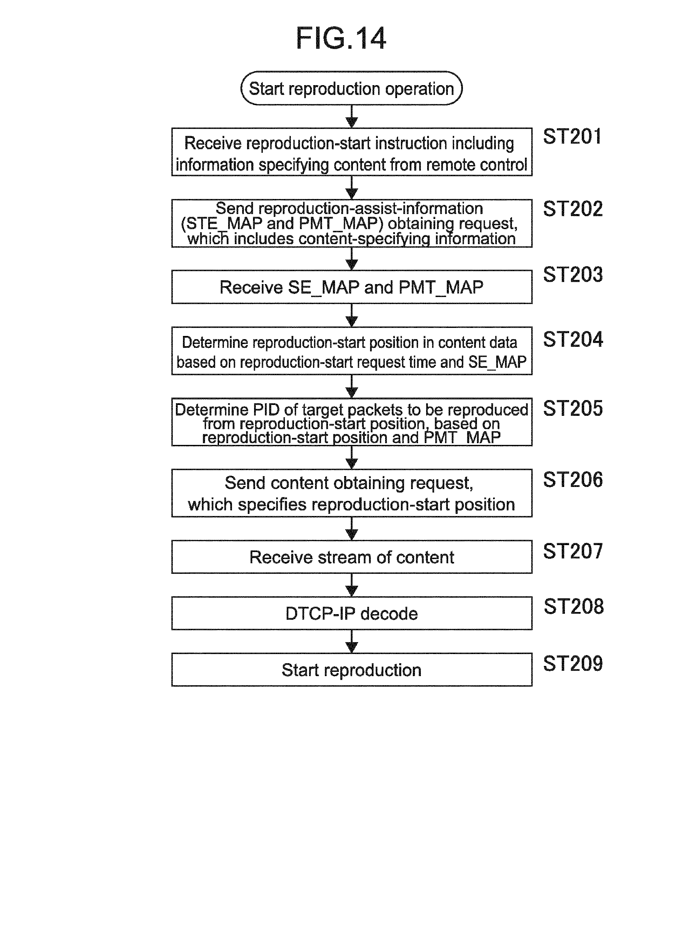

Fig. 14 is a flowchart showing how the reproduction apparatus 40 firstly selects content and finally reproduces the content.

First, operated by a user, the remote control 45 gives a content-list obtaining instruction to the reproduction apparatus 40. The content-list obtaining instruction is given to the host controller 41 of the reproduction apparatus 40 via the remote-control-signal receiving unit 43. The content manager 411 of the host controller 41 receives the content-list obtaining instruction. Then, the content manager 411 controls the HTTP sending/receiving unit 42 such that the HTTP sending/receiving unit 42 sends the content-list obtaining request to the recording/delivery apparatus 20 over the HTTP.

The content manager 214 of the host controller 21 of the recording/delivery apparatus 20 receives the content-list obtaining request. Then, the content manager 214 creates a content list. The content list is a list of information on content recorded in the storage 30. The HTTP sending/receiving unit 22 sends the content list to the reproduction apparatus 40 in reply.

The content manager 411 of the host controller 41 of the reproduction apparatus 40 receives the content list. Then, the display/speaker unit 44 displays the content list. A user of the reproduction apparatus 40 operates the remote control 45 to select content, which the user wishes to watch, from the displayed content list, and to instruct to start to reproduce the content. The remote-control-signal receiving unit 43 of the reproduction apparatus 40 receives a control signal output from the remote control 45, which is operated. The remote-control-signal receiving unit 43 supplies the control signal, as a reproduction-start instruction including information specifying the selected content, to the host controller 41 (Step S201). Further, in this case, a user of the reproduction apparatus 40 may specify a position in the specified content, from which the content is to be reproduced, by means of time (reproduction-start request time).

The content manager 411 of the host controller 41 of the reproduction apparatus 40 receives the reproduction-start instruction including content-specifying information. Then, the HTTP sending/receiving unit 22 sends a reproduction-assist-information obtaining request, which includes the content-specifying information, to the recording/delivery apparatus 20 (Step S202). Further, in a case where a reproduction-start request time of the specified content is specified, the reproduction-start request time is stored in a storage area such as a RAM in the host controller 41.

Meanwhile, the content manager 214 of the host controller 21 of the recording/delivery apparatus 20 receives a reproduction-assist-information obtaining request, which includes content-specifying information. Then, the content manager 214 retrieves PMT_MAP and SE_MAP from the storage 30. PMT_MAP and SE_MAP are reproduction-assist information, which is connected with appropriate content. The HTTP sending/receiving unit 22 sends PMT_MAP and SE_MAP to the reproduction apparatus 40 in reply.

The content manager 411 of the host controller 41 of the reproduction apparatus 40 receives PMT_MAP and SE_MAP, i.e., reproduction-assist information, by means of the HTTP sending/receiving unit 42. The content manager 411 stores PMT_MAP and SE_MAP in the information-map holding unit 414 (Step S203).

Note that, even after PMT_MAP and SE_MAP, i.e., reproduction-assist information, are stored, controlled by a user, the reproduction apparatus 40 may set a reproduction-start request time.

In a case where a reproduction-start request time is set in the reproduction apparatus 40, the content manager 411 gives a reproduction instruction, which includes the reproduction-start request time, to the reproduction controller 412.

The reproduction controller 412 receives the reproduction instruction, which includes the reproduction-start request time, from the content manager 411. Then, the reproduction controller 412 determines a reproduction-start position (byte order) in stream data, which corresponds to the reproduction-start request time, with reference to SE_MAP (Step S204).

Here, the "reproduction-start position which corresponds to the reproduction-start request time" is a position identified by start-position information (byte order) of a GOP head packet, which has PTS closest to the reproduction-start request time in each entry in SE_MAP.

Next, based on the reproduction-start position corresponding to the reproduction-start request time and based on PMT_MAP, the reproduction controller 412 determines PID of packets of an elementary stream to be reproduced from the reproduction-start position (Step S205).

The reproduction controller 412 determines PID by retrieving an elementary PID included in a section data body of a PMT packet, which is the closest to a reproduction-start position retrieved from SE_MAP, from PMT_MAP.

Next, the reproduction controller 412 sends a content obtaining request, which specifies the reproduction-start position determined in Step S204, to the recording/delivery apparatus 20 by means of the HTTP sending/receiving unit 42 (Step S206).

In a case of obtaining content stream data to be encoded, a request message called "DTCP-IP ClearTextByteSeek" is used as a content obtaining request. Information on the reproduction-start position, which is retrieved from SE_MAP, is added to the DTCP-IP ClearTextByteSeek request message. The request message requests to seek (search for) stream data, which is encoded in conformity to DTCP-IP standard, by byte range of plaintext data (unencoded data), and to obtain encoded data from an appropriate reproduction-start position. Further, in a case of obtaining content not to be encoded, an http_GET request message, to which information on a reproduction-start position retrieved from SE_MAP is added, may be used.

The content manager 214 of the host controller 21 of the recording/delivery apparatus 20 receives a DTCP-IP ClearTextByteSeek request message or an http_GET request message. Then, based on the information on the reproduction-start position added to the request message, the content manager 214 controls the storage interface 25 such that the storage interface 25 reads storage data of the specified content recorded in the storage 30 from the specified byte position.

In a case where the content obtaining request is an http_GET request message, the content manager 214 streams (delivers) stream data, which is read from the storage 30, to the reproduction apparatus 40 by means of the HTTP sending/receiving unit 22.

Further, in a case where the content obtaining request is a DTCP-IP ClearTextByteSeek request message, the content manager 214 encodes the stream data, which is read from the storage 30, by means of the DTCP encoder 215. The HTTP sending/receiving unit 22 streams (delivers) the stream data to the reproduction apparatus 40.

The reproduction controller 412 of the host controller 41 of the reproduction apparatus 40 receives stream data, which the recording/delivery apparatus 20 streams (delivers) in response to a content obtaining request, by means of the HTTP sending/receiving unit 42 (Step S207).

In a case where the received stream data is encoded, the reproduction controller 412 decodes the received stream data by means of the DTCP decoder 413 (Step S208). Then, the reproduction controller 412 extracts packets of an appropriate elementary stream from the received stream data or from the decoded stream data based on an elementary PID, which the reproduction controller 412 retrieved from PMT_MAP previously. The reproduction controller 412 reproduces the packet of the appropriate elementary stream (Step S209).

As described above, according to this embodiment, the reproduction apparatus 40 determines a reproduction-start position (byte order) of stream data, which corresponds to a reproduction-start request time specified by a user, with reference to SE_MAP. The reproduction apparatus 40 sends a content obtaining request, to which information on the reproduction-start position is added, to the recording/delivery apparatus 20. As a result, the reproduction apparatus 40 is capable of decoding and reproducing the obtained stream data from the head without analyzing the data. Further, start-position information registered in SE_MAP is information on a start position of a GOP head packet. Because of this, the reproduction apparatus 40 is capable of decoding video stream data from the head without analyzing the data. As a result, a load on the reproduction apparatus 40 is reduced. As a result, the reproduction apparatus 40 is more responsive in reproducing content from a specified reproduction-start request time.

Further, according to this embodiment, the reproduction apparatus 40 is configured to determine PID of packets of an elementary stream, which is necessary to reproduce stream data from a reproduction-start position, with reference to PMT_MAP. The reproduction apparatus 40 is configured to extract TS packets of an appropriate elementary stream from the obtained content stream data, and to reproduce the elementary stream. Because of this, it is not necessary to extract PMT packets by analyzing stream data, and to analyze the PMT packets. As a result, a load on the reproduction apparatus 40 is reduced. As a result, the reproduction apparatus 40 is more responsive in reproducing content from a specified reproduction-start request time.

In the above-mentioned embodiment, the recording/delivery apparatus 20 creates and records reproduction-assist information when recording content stream data. Alternatively, if there is an opportunity to analyze stream data again after content stream data is recorded in the storage 30, reproduction-assist information may be created and recorded on that occasion. In a case where for example content stream data recorded in the storage 30 is converted to BD format, it is necessary to analyze a transport stream (TS) for broadcasting, and to convert the transport stream (TS) to Partial TS. At the same time, reproduction-assist information may be created and recorded.

The present technology may be applied not only to reproducing content from a specified reproduction-start position, but also to reproducing content in a way other than the normal way. Examples of reproducing content in a way other than the normal way include fast-forward reproduction, fast-wind reproduction, skip reproduction, and the like. That is, in the case of reproducing content in a way other than the normal way, the reproduction apparatus 40 may search PMT_MAP and SE_MAP to thereby specify a reproduction-start position and a reproduction-range of byte orders, and may request the recording/delivery apparatus 20 to stream content.

In the present technology, stream data may be or may not be encoded in conformity with DTCP-IP standard.

In the present technology, a broadcasted transport stream (TS), which the recording/delivery apparatus 20 receives, may be or may not be scrambled.

In the above-mentioned embodiment, start-position information of a packet, which includes a changed PMT, in stream data is expressed by an offset of the number of packets from the head of stream data. Alternatively, the number of bytes may be used instead of an offset of the number of packets.

Similarly, start-position information (PKN_SE_start) of a GOP head packet may be expressed by the number of bytes instead of an offset of the number of packets from a head of stream data.

In so far as embodiments of the present disclosure described above can be implemented, at least in part, using software-controlled data processing apparatus, it will be appreciated that a computer program providing such software control and a transmission, storage or other medium by which such a computer program is provided are envisaged as aspects of the present disclosure.

The present disclosure is not limited to the above-described embodiments, and various modifications may be made without departing from the scope of the present teachings.

The present disclosure may be implemented as the following configurations.
(1) A recording/delivery apparatus, comprising:
   a receiver configured to receive a broadcast data stream;
   a recorder configured to record the received data stream in a recording medium;
   an information map creating unit configured to create a first information map based on the data stream, wherein the first information map identifies a changed packet in a target stream of the data stream, the information map creating unit recording the first information map in the recording medium, wherein the first information map is associated with the data stream;
   an information map supplying unit configured to supply the first information map to a reproduction apparatus coupled to the recording/delivery apparatus; and
   a stream data reply unit configured to provide, in response to a request for the data stream from the reproduction apparatus, a start position of the data stream.
(2) The recording/delivery apparatus according to (1), wherein the first information map includes a position indicator and a packet identifier of the changed packet.
(3) The recording/delivery apparatus according to (1), wherein the information map creating unit is configured to create a second information map.
(4) The recording/delivery apparatus according to (3), wherein the second information map includes a presentation time stamp that identifies a group of pictures in the data stream and a position indicator that identifies a start position of a head packet of the group of pictures in the data stream.
(5) The recording/delivery apparatus according to (4), wherein the position indicator identifies a reproduction position in the data stream, the reproduction position being an offset of the number of packets from a head of the data stream.
(6) The recording/delivery apparatus according to (3), wherein the information map creating unit is configured to record the second information map in the recording medium, the second information map being associated with the data stream.
(7) The recording/delivery apparatus according to (3), wherein the information map supplying unit is configured to supply the second information map to the reproduction apparatus with the first information map.
(8) A reproduction apparatus, comprising:
   first storage configured to store a first information map, wherein the first information map identifies a position at which a packet of a data stream is changed, the data stream being recorded in a recording/delivery apparatus coupled to the reproduction apparatus; and
   a reproduction controller configured to:
      receive the data stream from the recording/delivery apparatus,
      determine a target stream from the received data stream using the first information map, wherein the target stream starts at the position at which the packet of the data stream is changed, and
      reproduce the target stream.
(9) The reproduction apparatus according to (8), wherein the first information map comprises a position indicator and a packet identifier to identify the position at which the packet of the data stream is changed.
(10) The reproduction apparatus according to (8), further comprising:
   second storage configured to store a second information map, wherein the second information map identifies a head packet of a group of pictures (GOP) in the data stream.
(11) The reproduction apparatus according to (10), wherein the second information map comprises a presentation time and a position indicator.
(12) The reproduction apparatus according to (11), wherein the reproduction controller is configured to:
   receive a reproduction start request time of the data stream,
   access the position indicator from the second information map to determine a start position corresponding to the reproduction start request time, and
   provide the start position to the recording/delivery apparatus to obtain the data stream.
(13) The reproduction apparatus according to (11), wherein the position indicator in the second information map identifies a reproduction position in the data stream.
(14) The reproduction apparatus according to (13), wherein the reproduction position is an offset of a number of packets from a head of the data stream.
(15) A recording/delivery method, comprising:
   receiving a data stream;
   recording the received data stream in a recording medium;
   creating an information map, wherein the information map identifies a position at which a packet of the data stream is changed;
   recording the information map in the recording medium, wherein the information map is associated with the data stream;
   supplying the information map to a reproduction apparatus; and
   receiving a request from the reproduction apparatus, wherein a start position in the data stream is specified in the request.
(16) A reproduction method, comprising:
   receiving a data stream;
   accessing an information map to determine a target stream of the received data stream, wherein the information map identifies a position at which a packet of the data stream is changed; and
   reproducing the target stream, wherein the target stream starts at the position at which the packet of the data stream is changed.
   It should be understood by those skilled in the art that various modifications, combinations, sub-combinations and alterations may occur depending on design requirements and other factors insofar as they are within the scope of the appended claims or the equivalents thereof.
(17) A reproduction apparatus, comprising:
   first information-map storage configured to store a first information map, the first information map including position information and a packet identifier, the position information being information on a position at which a packet identifier of an elementary stream of stream data of content is changed, the stream data of the content being recorded in a recording/delivery apparatus connected with the reproduction apparatus via a network, the packet identifier being the changed packet identifier of the elementary stream; and
   a reproduction controller configured
      to specify a start position, and to obtain the stream data of the content from the recording/delivery apparatus via the network, and
      to determine a target elementary stream from the obtained stream data by using the first information map, and to reproduce the target elementary stream.
(18) The reproduction apparatus according to claim (17), further comprising:
   second information-map storage configured to store a second information map, the second information map including PTS (Presentation Time Stamp) and start-position information, the PTS (Presentation Time Stamp) being of a head packet of a GOP (Group Of Pictures) of the stream data of the content, the stream data of the content being recorded in the recording/delivery apparatus, the start-position information being information on a start position of the packet in the stream data, wherein
      the reproduction controller is configured
      to receive a reproduction-start request time of the stream data of the content,
      to determine start-position information corresponding to the reproduction-start request time from the second information map, and
      to give a start position of the stream data of the content to the recording/delivery apparatus based on the start-position information, and to obtain the stream data of the content.
(19) The reproduction apparatus according to claim (18), wherein
   the start-position information in the second information map is information on a reproduction position in the stream data, the reproduction position being expressed by an offset of the number of packets from a head of the stream data.
(20) A recording/delivery apparatus, comprising:
   a receiver unit configured to receive broadcasted stream data of content;
   a stream recorder configured to record the received stream data in a recording medium; an information-map creating unit configured
      to analyze the stream data, and to create a first information map, the first information map including position information and a packet identifier, the position information being information on a position at which a packet identifier of an elementary stream of the stream data is changed, the packet identifier being the changed packet identifier of the elementary stream, and
   to record the first information map in the recording medium, the first information map being connected with the stream data;
      an information-map supplying unit configured to supply the first information map to a reproduction apparatus in response to a request from the reproduction apparatus, the reproduction apparatus being connected with the recording/delivery apparatus via a network; and
      a stream-data reply unit configured to reply to an obtaining request from the reproduction apparatus, a start position in the stream data being specified in the obtaining request.
(21) The recording/delivery apparatus according to claim (20), wherein
   the information-map creating unit is configured
   to create a second information map, the second information map including PTS (Presentation Time Stamp) and start-position information, the PTS (Presentation Time Stamp) being of a head packet of a GOP (Group Of Pictures) of the stream data, the start-position information being information on a start position of the packet in the stream data, and
   to record the second information map in the recording medium, the second information map being connected with the stream data, and
   the information-map supplying unit is configured to supply the second information map to the reproduction apparatus with the first information map.
(22) The recording/delivery apparatus according to claim (21), wherein
   the start-position information in the second information map is information on a reproduction position in the stream data, the reproduction position being expressed by an offset of the number of packets from a head of the stream data.
(23) A reproduction method, comprising:
   specifying, by a reproduction controller, a start position, and obtaining stream data of content from a recording/delivery apparatus via a network; and
   determining, by the reproduction controller, a target elementary stream from the obtained stream data by using a first information map, and reproducing the target elementary stream, the first information map being prestored in first information-map storage, the first information map including position information and a packet identifier, the position information being information on a position at which a packet identifier of an elementary stream of the stream data is changed, the packet identifier being the changed packet identifier of the elementary stream.
(24) A recording/delivery method, comprising:
   receiving, by a receiver unit, broadcasted stream data of content;
   recording, by a stream recorder, the received stream data in a recording medium;
   analyzing, by an information-map creating unit, the stream data, and creating a first information map, the first information map including position information and a packet identifier, the position information being information on a position at which a packet identifier of an elementary stream of the stream data is changed, the packet identifier being the changed packet identifier of the elementary stream;
   recording, by the information-map creating unit, the first information map in the recording medium, the first information map being connected with the stream data;
   supplying, by an information-map supplying unit, the first information map to a reproduction apparatus in response to a request from the reproduction apparatus, the reproduction apparatus being connected with the recording/delivery apparatus via a network; and
   replying, by a stream-data reply unit, in response to an obtaining request from the reproduction apparatus, a start position in the stream data being specified in the obtaining request.

## Claims

1. A recording/delivery apparatus, comprising:
a receiver configured to receive a broadcast data stream;
a recorder configured to record the received data stream in a recording medium;
an information map creating unit configured to create a first information map based on the data stream, wherein the first information map identifies a changed packet in a target stream of the data stream, the information map creating unit recording the first information map in the recording medium, wherein the first information map is associated with the data stream;
an information map supplying unit configured to supply the first information map to a reproduction apparatus coupled to the recording/delivery apparatus; and
a stream data reply unit configured to provide, in response to a request for the data stream from the reproduction apparatus, a start position of the data stream.

2. The recording/delivery apparatus according to claim 1, wherein the first information map includes a position indicator and a packet identifier of the changed packet.

3. The recording/delivery apparatus according to claim 1 or 2, wherein the information map creating unit is configured to create a second information map.

4. The recording/delivery apparatus according to claim 3, wherein the second information map includes a presentation time stamp that identifies a group of pictures in the data stream and a position indicator that identifies a start position of a head packet of the group of pictures in the data stream; and optionally wherein the position indicator identifies a reproduction position in the data stream, the reproduction position being an offset of the number of packets from a head of the data stream.

5. The recording/delivery apparatus according to claim 3 or 4, wherein the information map creating unit is configured to record the second information map in the recording medium, the second information map being associated with the data stream.

6. The recording/delivery apparatus according to any of claims 3 to 5, wherein the information map supplying unit is configured to supply the second information map to the reproduction apparatus with the first information map.

7. A reproduction apparatus, comprising:
first storage configured to store a first information map, wherein the first information map identifies a position at which a packet of a data stream is changed, the data stream being recorded in a recording/delivery apparatus coupled to the reproduction apparatus; and
a reproduction controller configured to:
receive the data stream from the recording/delivery apparatus,
determine a target stream from the received data stream using the first information map, wherein the target stream starts at the position at which the packet of the data stream is changed, and
reproduce the target stream.

8. The reproduction apparatus according to claim 7, wherein the first information map comprises a position indicator and a packet identifier to identify the position at which the packet of the data stream is changed.

9. The reproduction apparatus according to claim 7 or 8, further comprising:
second storage configured to store a second information map, wherein the second information map identifies a head packet of a group of pictures (GOP) in the data stream.

10. The reproduction apparatus according to claim 9, wherein the second information map comprises a presentation time stamp and a position indicator.

11. The reproduction apparatus according to claim 10, wherein the reproduction controller is configured to:
receive a reproduction start request time of the data stream,
access the position indicator from the second information map to determine a start position corresponding to the reproduction start request time, and
provide the start position to the recording/delivery apparatus to obtain the data stream.

12. The reproduction apparatus according to claim 10 or 11, wherein the position indicator in the second information map identifies a reproduction position in the data stream; and optionally wherein the reproduction position is an offset of a number of packets from a head of the data stream.

13. A recording/delivery method, comprising:
receiving a data stream;
recording the received data stream in a recording medium;
creating an information map, wherein the information map identifies a position at which a packet of the data stream is changed;
recording the information map in the recording medium, wherein the information map is associated with the data stream;
supplying the information map to a reproduction apparatus; and
receiving a request from the reproduction apparatus, wherein a start position in the data stream is specified in the request.

14. A reproduction method, comprising:
receiving a data stream;
accessing an information map to determine a target stream of the received data stream, wherein the information map identifies a position at which a packet of the data stream is changed; and
reproducing the target stream, wherein the target stream starts at the position at which the packet of the data stream is changed.

15. A computer program product comp[rising computer implementable instructions for causing a programmable apparatus to carry out the method of claim 13 or 14.
